# EUROPÄISCHE PATENTSCHRIFT

(11) **EP 1 279 843 B1**
(45) Veröffentlichungstag und Bekanntmachung des Hinweises auf die Patenterteilung: **12.04.2006**
(21) Anmeldenummer: 02012653.8
(22) Anmeldetag: 07.06.2002
(51) Int. Cl.: F16C 17/00, F16C 33/04, F16C 33/08

(54) **Metall-Trägerteil mit einer angeschweissten Lagerbuchse**
Metal support with a welded-on bearing bushing
Support métallique muni d'un coussinnet de palier soudé sur celui-ci

(30) Priorität: 27.07.2001 DE 10136821
(43) Veröffentlichungstag der Anmeldung: 29.01.2003
(73) Patentinhaber: Bayerische Motoren Werke Aktiengesellschaft, 80809 München (DE)
(72) Erfinder: Gonschorek, Timm, 80337 München (DE); Graf, Thomas, 86633 Neuburg (DE)

(56) Entgegenhaltungen:
- DE-A- 19 645 962
- DE-U- 8 424 844
- PATENT ABSTRACTS OF JAPAN vol. 009, no. 098 (M-375), 27. April 1985 (1985-04-27) & JP 59 222622 A (TOSHIBA KK), 14. Dezember 1984 (1984-12-14)

## Beschreibung

Die Erfindung betrifft ein Metall-Trägerteil mit einer angeschweißten Lagerbuchse zur Aufnahme eines Anbau-Teiles, wobei die Lagerbuchse eine Aufnahmeöffnung sowie eine diese umgebende Ringstruktur aufweist. Ein derartiges metallisches Trägerteil kann bspw. als Achsträgerteil eines Fahrzeugs zum Einsatz kommen, wobei dann bevorzugt dieses Trägerteil als Hohlprofil und/oder in Leichtmetall ausgebildet ist.

Neben dem genannten Anwendungsfall kann es grundsätzlich für die unterschiedlichsten Anwendungsfälle erforderlich sein, an einem irgendwie gearteten metallischen Trägerteil eine Lagerbuchse zur Aufnahme eines Anbauteiles oder dgl. vorzusehen, die am Trägerteil über eine Schweißverbindung befestigt wird bzw. ist. In eine Aufnahmeöffnung dieser Lagerbuchse, die von einer sog. Ringstruktur umgeben ist, kann dabei ein Anbauteil eingesteckt sein. Oft erstreckt sich die Aufnahmeöffnung zusammen mit der Ringstruktur als eigenständige Lagerbuchse durch das Trägerteil hindurch. Ein Bolzen oder dgl., der in die Aufnahmeöffnung der Lagerbuchse eingesteckt ist, kann somit durch das Trägerteil (quer) hindurch gesteckt sein und stützt sich sich zunächst nur an der Lagerbuchse als solcher ab. Da diese Lagerbuchse jedoch mit dem Metall-Trägerteil verschweißt ist, wird die Abstützkraft selbstverständlich in das Trägerteil weitergeleitet, wobei die Kraftangriffsrichtung üblicherweise nicht in der Mittenebene des Trägerteils liegt, so dass über die Lagerbuchse zusätzlich ein Moment in das Trägerteil eingeleitet wird.

Insbesondere wenn das Trägerteil hohl ausgebildet ist, treten im Übergangsbereich (d.h. im Bereich der Schweißnaht) zwischen der relativ steifen Lagerbuchse und dem demgegenüber relativ weichen Trägerteil hohe mechanische Spannungen auf, was grundsätzlich unerwünscht ist. Besonders gravierend ist dieses Problem, wenn das Trägerteil besonders weich ist, d.h. wenn das Metall-Trägerteil bspw. in Leichtmetall ausgeführt ist und/oder relativ dünne Wandstärken aufweist.

Hier soll nun aufgezeigt werden, wie derartige Spannungsspitzen reduziert werden können, d.h. wie die mechanischen Vergleichsspannungen bei gleicher Kräftebelastung insbesondere im Übergangsbereich zwischen der Lagerbuchse und dem Trägerteil gering gehalten werden können (= Aufgabe der vorliegenden Erfindung).
Die Lösung dieser Aufgabe ist dadurch gekennzeichnet, dass innerhalb der (umgebenden) Ringstruktur, die außenseitig mit dem Metall-Trägerteil verschweißt ist, neben der Aufnahmeöffnung eine weitere sog. Entlastungs-Öffnung vorgesehen ist, die von der Aufnahmeöffnung durch einen mit der Ringstruktur verbundenen Steg getrennt ist. Vorteilhafte Aus- und Weiterbildungen sind Inhalt der Unteransprüche.

Erfindungsgemäß wird die sog. Ringstruktur, welche die Aufnahmeöffnung der Lagerbuchse umgibt, größer als eigentlich benötigt gestaltet, um die Lagerbuchse als Ganzes etwas schwächer oder weicher zu gestalten, nämlich dadurch, dass innerhalb der Ringstruktur neben der funktional benötigten Aufnahmeöffnung eine weitere Öffnung vorgesehen wird, die hier als Entlastungsöffnung bezeichnet wird. Der mit dieser Maßnahme erzielbare Effekt, nämlich eine Absenkung der im festigkeitskritischen Schweißnahtbereich zwischen der Ringstruktur und dem Metall-Trägerteil auftretenden mechanischen Spannungen gegenüber dem bekannten Stand der Technik bei ansonsten gleicher Belastung, lässt sich durch gängige Großrechner-Simulationsprogramme (bspw. auf der Basis finiter Elemente) nachweisen.

Vorteilhafterweise besitzt eine aufgrund der Entlastungsöffnung im Querschnitt vergrößerte Lagerbuchse eine hinsichtlich der Längenabmessung vergrößerte Ringstruktur, so dass sich eine längere Schweißnaht ergibt, über die die Lagerbuchse mit dem Metall-Trägerteil verbunden ist. Die von der Lagerbuchse bzw. von deren Aufnahmeöffnung ausgehenden Spannungsbelastungen, die vom sog. Anbau-Teil in die Lagerbuchse und somit in das Metall-Trägerteil eingeleitet werden, werden somit großflächiger in das Metall-Trägerteil eingeleitet. Jedoch zeigt dieser Effekt alleine, d.h. ohne dass neben der Aufnahmeöffnung eine erfindungsgemäße Entlastungsöffnung vorgesehen ist, keine ausreichende Wirkung. Erst zusammen mit einer Entlastungsöffnung stellt sich die gewünschte Spannungs-Reduzierung ein, da aufgrund dieser Entlastungsöffnung das o.g. zusätzlich über die Lagebuchse eingeleitete Moment nunmehr nahezu gleichmäßig über der gesamten Schweißnaht verteilt wird.

Wenn über das Anbau-Teil in die Aufnahmeöffnung der Lagerbuchse Kräfte in einer bevorzugten sog. Haupt-Kraftangriffs-Richtung eingeleitet werden, so sollte eine Haupterstreckungsrichtung der Lagerbuchse bzw. deren Ringstruktur mit dieser Haupt-Kraftangriffs-Richtung im wesentlichen übereinstimmen, um beste Ergebnisse zu erzielen. So kann die Ringstruktur bspw. oval geformt sein. Im Hinblick auf eine kompakte Bauweise kann dabei eine länglich geformte Entlastungsöffnung im Bereich des Steges, durch den die Entlastungsöffnung von der Aufnahmeöffnung getrennt ist, konkav und am gegenüberliegenden Ende konvex ausgebildet sein, da sich hiermit ein Steg mit annährend konstanter und demzufolge relativ geringer Wandstärke realisieren lässt.

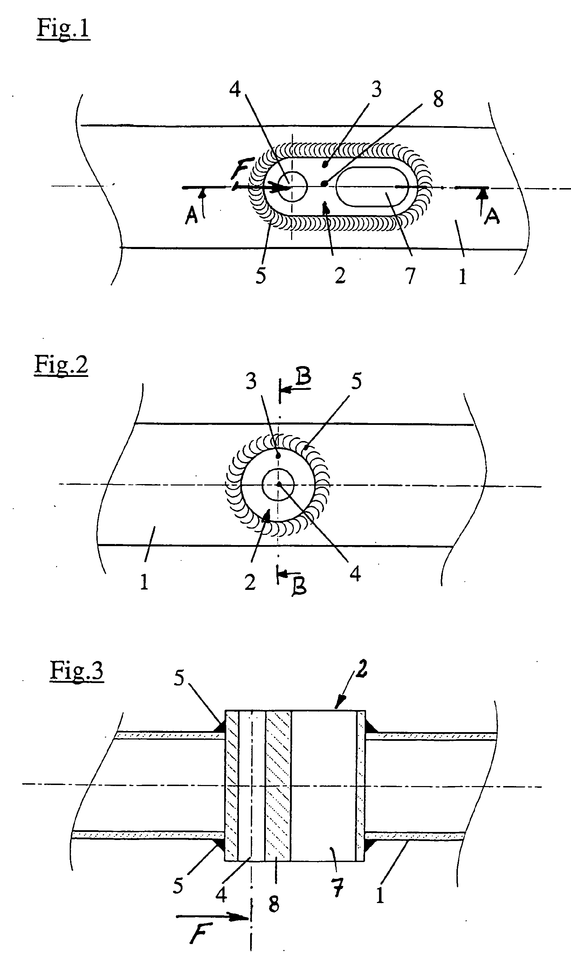

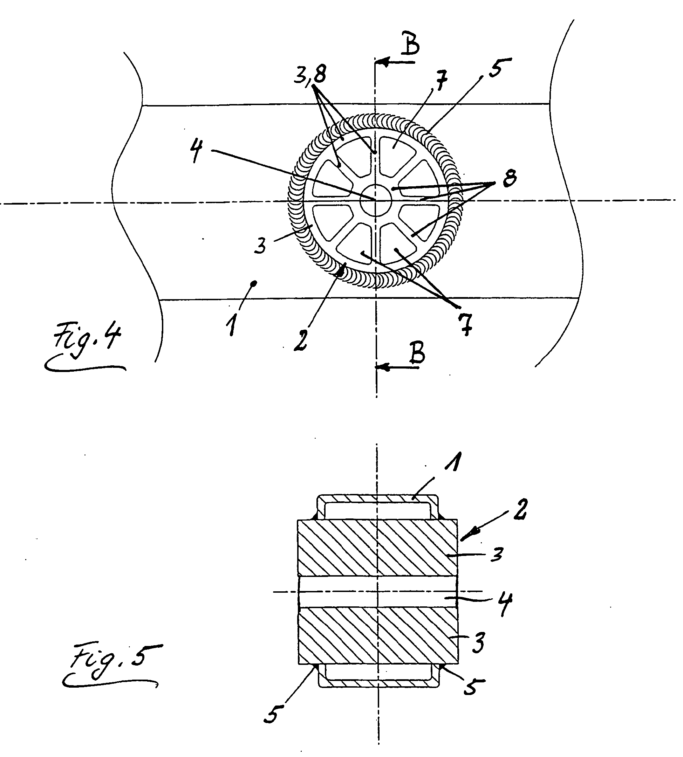

Grundsätzlich können mehrere Entlastungsöffnungen innerhalb der Ringstruktur vorgesehen sein, insbesondere wenn keine bevorzugte Haupt-Kraftangriffs-Richtung existiert. Dies sowie weitere Vorteile und Merkmale gehen auch aus der folgenden Beschreibung bevorzugter Ausführungsbeispiele hervor, die in den beigefügten Prinzipskizzen dargestellt sind. Ein erstes Ausführungsbeispiel zeigt **Figur 1,** in der ebenso wie in **Figur 2,** die den üblichen Stand der Technik wiedergibt, eine Aufsicht auf ein Metall-Trägerteil mit angeschweißter Lagerbuchse dargestellt ist. **Figur 3** zeigt den Schnitt A-A aus Figur 1. In **Figur 4** ist die Aufsicht auf ein weiteres Ausführungsbeispiel dargestellt, von dem **Figur 5** den Schnitt B-B zeigt, der im übrigen gleich dem Schnitt B-B aus **Figur 2** ist.

Zunächst bezugnehmend auf **Figur 2** und den bekannten Stand der Technik ist mit der Bezugsziffer 1 ein Metall-Trägerteil bezeichnet, das bevorzugt als Hohlprofil (bspw. als Rohr) ausgebildet ist und das zur Gewichtsreduzierung nicht nur relativ dünnwandig ausgeführt ist, sondern aus dem gleichen Grund aus einer Leichtmetall-Legierung besteht. In dieses Metall-Trägerteil 1 ist eine Lagerbuchse 2 eingebracht, derart, dass diese Lagerbuchse 2 das Metallträgerteil 1 in einer Bohrung durchdringt, wobei die Lagerbuchse 2 an der Außenwand des Metallträgerteils 1 mit diesem verschweißt ist. Dies geht auch aus **Figur 5,** die den Schnitt B-B aus Figur 2 (sowie aus Figur 4) zeigt, hervor. Die entsprechende Schweißnaht ist dabei mit der Bezugsziffer 5 versehen.

In eine die Lagerbuchse 2 längs deren Achse durchdringende Aufnahmeöffnung 4 kann ein Bolzen oder anderes beliebiges Anbauteil (nicht dargestellt) eingesteckt werden, so dass über diese Lagerbuchse 2 dieses Anbauteil oder dieser Bolzen bzw. ein wiederum von diesem Bolzen getragenes Element am Metall-Trägerteil 1 gelagert werden kann. Üblicherweise verläuft diese Aufnahmeöffnung 4 dabei durch die gesamte Lagerbuchse 2 hindurch, d.h. sie erstreckt sich über die gesamte Länge der Lagerbuchse 2, wie **Figur 5** zeigt.

In **Figur 1** ist ein erfindungsgemäßes Metall-Trägerteil 1 mit einer entsprechend gestalteten ersten Ausführungsform der Lagerbuchse 2 dargestellt. Wie ersichtlich ist innerhalb der Ringstruktur 3 neben der Aufnahmeöffnung 4 eine weitere sog. Entlastungs-Öffnung 7 vorgesehen, die von der Aufnahmeöffnung 4 durch einen mit der Ringstruktur 3 verbundenen Steg 8 getrennt ist. Praktisch bilden die Ringstruktur 3 und der Steg 8 eine Einheit oder ein eigenständiges Bauteil, innerhalb dessen/derer nebeneinanderliegend zwei Durchbrüche oder Löcher vorgesehen sind. Analog der Aufnahmeöffnung 4 verläuft die Entlastungsöffnung 7 durch die gesamte Lagerbuchse 2 hindurch, d.h. sie erstreckt sich über die gesamte Länge der Lagerbuchse 2, wie Figur 3 zeigt.

Dabei wird durch das zweite "Loch", nämlich die Entlastungsöffnung 7, dieses eigenständige Bauteil bzw. die erfindungsgemäße Lagerbuchse 2 gegenüber dem in **Figur 2** dargestellten üblichen Stand der Technik geschwächt, d.h. weicher gestaltet. Da erfindungsgemäß weiterhin die Schweißnaht 5 zwischen dem Rand der Ringstruktur 3 und dem Metall-Trägerteil 1 vorgesehen ist, treten im Übergangsbereich zwischen der Lagerbuchse 2 und dem Trägerteil 1 im Umfeld der Schweißnaht 5 niedrigere Spannungen auf als im bislang üblichen Stand der Technik.

In den **Figuren 1 und 3** ist eine über am nicht dargestellten, in die Aufnahmeöffnung 4 eingesteckten Bolzen angreifende Kraft F dargestellt, die nicht nur in das Trägerteil 1 eingeleitet wird, sondern aufgrund des exzentrischen Angriffspunktes ein zusätzliches Moment erzeugt. Insbesondere dieses Moment wird durch die vorgeschlagene Gestaltung mit der Entlastungsöffnung 7 gleichmäßiger über dem Umfang der Lagerbuchse 2 verteilt und somit gleichmäßiger verteilt über die Schweißnaht 5 in das Trägerteil 1 eingeleitet. Dies führt zu einer nennenswerten Spannungsreduzierung.

Insbesondere wenn eine sog. Haupt-Kraftangriffsrichtung in der Aufnahmeöffnung 4 vorliegt, d.h. dass die von einem Anbau-Teil oder dgl. in die Lagerbuchse 2 eingeleitete Kraft praktisch stets in einer bevorzugten Richtung, hier durch den Pfeil F dargestellt, wirkt, werden beste Ergebnisse mit einer Lagerbuchse 2 erzielt, deren Ringstruktur 3 in Draufsicht betrachtet eine Haupterstreckungsrichtung aufweist, die im wesentlichen mit der Haupt-Kraftangriffs-Richtung F in der Aufnahmeöffnung 4 übereinstimmt. Das Ausführungsbeispiel nach **Figur 1** zeigt eine solche Gestaltung, da die größere Längsachse und somit die sog. Haupterstreckungsrichtung der oval gestalteten Ringstruktur 3 parallel zur Haupt-Kraftangriffs-Richtung F ist bzw. mit dieser zusammenfällt.

Eine optimale Reduzierung der mechanischen Spannungen im Bereich der Schweißnaht 5 ergibt sich dann, wenn die Ringstruktur 3 eine im wesentlichen ovale Form aufweist. Dies ermöglicht es, auch die Entlastungsöffnung 7 - wie gezeigt - länglich zu formen. Bewährt hat sich dabei die dargestellte Form in dieser oder ähnlicher Weise, wobei die länglich geformte Entlastungsöffnung 7 im Bereich des Steges 8 (bzw. neben diesem) abweichend von der Figurendarstellung konkav anstatt wie am gegenüberliegenden Ende (in Figur 1 rechtsliegend dargestellt) konvex ausgebildet sein kann. Abweichend von der Darstellung nach **Figur 1** kann femer bei einer (an sich üblichen) kreisförmigen Aufnahmeöffnung 4 der Steg 8 eine dem benachbarten Kreissegment der Aufnahmeöffnung 4 parallele Form besitzen.

Ein anderes Ausführungsbeispiel ist in **Figur 4** dargestellt. Hier sind über dem durch die Ringstruktur 3 beschriebenen Vollkreis im wesentlichen gleichmäßig verteilt mehrere Entlastungsöffnungen 7 vorgesehen, die jeweils durch einen Steg 8 voneinander sowie durch einen umlaufenden Steg 8 von der Aufnahmeöffnung 4 getrennt sind. Auch mit dieser Gestaltung- stellt sich eine wesentliche Reduzierung der im Bereich der Schweißnaht 5 in das Metall-Trägerteil 1 eingeleiteten Spannungen ein, wobei hier keine Haupt-Kraftangriffs-Richtung vorliegt, d.h. in die Aufnahmeöffnung 4 der Lagerbuchse 2 können in allen möglichen (zur Zeichenebene parallelen) Richtungen eingeleitet werden.

Mit der in Figur 1 gezeigten Lagerbuchse 2 wurden gegenüber dem Stand der Technik nach Figur 2 die Vergleichsspannungen (bspw. nach MISES) insbesondere im kritischen Übergangsbereich zwischen der Lagerbuchse 2 und dem Trägerteil 1 mehr als halbiert. Besonders effektiv ist die vorgeschlagene Lösung bei fliegenden Lagerungen; aber auch bei hochbelasteten beidseitigen Lagerungen können Fortschritte hinsichtlich einer Reduzierung der Spannungen erzielt werden. Dies ermöglicht es somit, das Trägerteil 1 selbst bzw. dessen Wandstärken (im Falle eines Hohlprofils) äußerst dünn zu gestalten, wodurch sich eine vorteilhafte Gewichtsreduzierung ergibt. Dies gilt beispielsweise, wenn es sich beim Metall-Trägerteil 1 um ein Achsträgerteil eines Fahrzeuges handelt, jedoch kann dies sowie eine Vielzahl von Details insbesondere konstruktiver Art durchaus abweichend vom gezeigten Ausführungsbeispiel gestaltet sein, ohne den Inhalt der Patentansprüche zu verlassen.

## Patentansprüche

1. Metall-Trägerteil (1) mit einer angeschweißten Lagerbuchse (2) zur Aufnahme eines Anbau-Teiles, wobei die Lagerbuchse (2) eine Aufnahmeöffnung (4) sowie eine diese umgebende Ringstruktur (3) aufweist,
**dadurch gekennzeichnet, dass** innerhalb der Ringstruktur (3), die außenseitig mit dem Metall-Trägerteil (1) verschweißt ist, neben der Aufnahmeöffnung (4) eine weitere sog. Entlastungsöffnung (7) vorgesehen ist, die von der Aufnahmeöffnung (4) durch einen mit der Ringstruktur (3) verbundenen Steg (8) getrennt ist.

2. Metall-Trägerteil nach Anspruch 1,
**dadurch gekennzeichnet, dass** innerhalb der Ringstruktur (3) mehrere Entlastungsöffnungen (7) vorgesehen sind, die durch einen Steg (8) voneinander getrennt sind.

3. Metall-Trägerteil nach Anspruch 1 oder 2,
**dadurch gekennzeichnet, dass** die Ringstruktur (3) der Lagerbuche (2) in Draufsicht betrachtet eine Haupterstreckungsrichtung aufweist, die im wesentlichen mit der Haupt-Kraftangriffs-Richtung (F) in der Aufnahmeöffnung (4) übereinstimmt.

4. Metall-Trägerteil nach einem der vorangegangenen Ansprüche,
**dadurch gekennzeichnet, dass** die Ringstruktur (3) eine im wesentlichen ovale Form aufweist.

5. Metall-Trägerteil nach einem der vorangegangen Ansprüche,
**dadurch gekennzeichnet, dass** die länglich geformte Entlastungsöffnung (7) im Bereich des Steges (8) konkav und am gegenüberliegenden Ende konvex ausgebildet ist.

6. Metall-Trägerteil nach einem der vorangegangen Ansprüche,
**dadurch gekennzeichnet, dass** die Lagerbuchse (2) mit der Ringstruktur (3) und der oder den Entlastungsöffnung(en) (7) das Metall-Trägerteil (1) durchdringt.

7. Metall-Trägerteil nach einem der vorangegangenen Ansprüche,
**dadurch gekennzeichnet, dass** das Metall-Trägerteil (1) hohl ausgebildet ist.

8. Metall-Trägerteil nach einem der vorangegangenen Ansprüche in Form eines Achsträgerteils eines Fahrzeuges.

## Claims

1. A metal support part (1) with a welded-on bearing bush (2) for receiving an attachment part, wherein the bearing bush (2) has a receiving aperture (4) and an annular structure (3) surrounding the latter, **characterised in that** inside the annular structure (3), which is welded at the outside to the metal support part (1), next to the receiving aperture (4), a further so-called relief aperture (7) is provided, which is separated from the receiving aperture (4) by a web (8) connected to the annular structure (3).

2. A metal support part according to claim 1, **characterised in that**, inside the annular structure (3), a plurality of relief apertures (7) are provided, which are separated from one another by a web (8).

3. A metal support part according to claim 1 or 2, **characterised in that** the annular structure (3) of the bearing bush (2), viewed in plan view, has a main extension direction, which substantially coincides with the main force application direction (F) in the receiving aperture (4).

4. A metal support part according to any one of the preceding claims, **characterised in that** the annular structure (3) substantially has an oval form.

5. A metal support part according to any one of the preceding claims, **characterised in that** the relief aperture (7), formed in an elongate manner, is configured to be concave in the region of the web (8) and convex at the opposing end.

6. A metal support part according to any one of the preceding claims, **characterised in that** the bearing bush (2) with the annular structure (3) and the relief aperture(s) (7) penetrates the metal support part (1).

7. A metal support part according to any one of the preceding claims, **characterised in that** the metal support part (1) is hollow.

8. A metal support part according to any one of the preceding claims in the form of an axle support part of a vehicle.

## Revendications

1. Élément de support métallique (1) comprenant un coussinet de palier (2) soudé sur celui-ci pour recevoir un élément d'assemblage, le coussinet (2) présentant une ouverture de réception (4) ainsi qu'une structure annulaire (3) entourant celle-ci,
**caractérisé en ce qu'**
à l'intérieur de la structure annulaire (3) qui est soudée, sur la face extérieure, à l'élément de support métallique (1), il est prévu, outre l'ouverture de réception (4), une autre ouverture qui sert de décharge (7) et est séparée de l'ouverture de réception (4) par une traverse (8) reliée à la structure annulaire (3).

2. Élément de support métallique selon la revendication 1,
**caractérisé en ce qu'**
à l'intérieur de la structure annulaire (3), plusieurs ouvertures de décharge (7) sont prévues et séparées les unes des autres par une traverse (8).

3. Élément de support métallique selon la revendication 1 ou 2,
**caractérisé en ce que**
la structure annulaire (3) du coussinet (2), vue de dessus, présente une direction principale d'excontrainte qui coïncide essentiellement avec la direction principale de la force d'attaque (F) exercée dans l'ouverture de réception (4).

4. Élément de support métallique selon l'une des revendications précédentes,
**caractérisé en ce que**
la structure annulaire (3) présente une forme essentiellement ovale.

5. Élément de support métallique selon l'une des revendications précédentes,
**caractérisé en ce que**
l'ouverture de décharge de forme longitudinale (7) est concave au niveau de la traverse (8) et convexe à l'extrémité opposée.

6. Élément de support métallique selon l'une des revendications précédentes,
**caractérisé en ce que**
le coussinet (2), avec la structure annulaire (3) et la ou les ouverture(s) de décharge (7), pénètre dans l'élément de support métallique (1).

7. Élément de support métallique selon l'une des revendications précédentes,
**caractérisé en ce que**
l'élément de support métallique (1) est creux.

8. Élément de support métallique selon l'une des revendications précédentes, ayant la forme d'un élément de support d'essieu d'un véhicule.
